# EUROPÄISCHE PATENTANMELDUNG

(11) **EP 0 660 002 A1**
(43) Veröffentlichungstag der Anmeldung: **28.06.1995**
(21) Anmeldenummer: 93120872.2
(22) Anmeldetag: 24.12.1993
(51) Int. Cl.: F16B 12/52, A47B 13/02

(54) **Beschlag zum Verbinden von Pfosten mit plattenartigen Elementen**

(71) Anmelder: HÄFELE GmbH & Co., D-72202 Nagold (DE)
(72) Erfinder: Schilter, Thomas, CH-6370 Stans (CH)
(74) Vertreter: KOHLER SCHMID + PARTNER

(57) **Zusammenfassung**

Die Erfindung betrifft einen Beschlag zum Verbinden von Pfosten od. dgl. mit plattenartigen Elementen insbesondere an Möbeln, vorzugsweise zum Verbinden von Tischbeinen mit Tischplatten mit einer Anlagefläche (1) für den Pfosten, wobei die Anlagefläche (1) den Pfosten zumindest teilweise umgreift sowie mit wenigstens einer Tragfläche (7, 8) für das plattenartige Element. Um einen Beschlag zu schaffen, mittels dessen sich ohne zusätzliche Versteifungen stabile Gesamtkonstruktionen realisieren lassen, ist der Beschlag mit wenigstens einem Winkelstück (3, 4) versehen, wobei die eine Schenkelfläche des Winkelstücks (3, 4) als Tragfläche (7, 8) vorgesehen ist und sich über die als Stützelement (5, 6) ausgebildete zweite Schenkelfläche des Winkelstücks (3, 4) an der Anlagefläche (1) abstützt.

## Beschreibung

Die Erfindung betrifft einen Beschlag zum Verbinden von Pfosten od. dgl. mit plattenartigen Elementen insbesondere an Möbeln, vorzugsweise zum Verbinden von Tischbeinen mit Tischplatten, mit einer Anlagefläche für den Pfosten, wobei die Anlagefläche den Pfosten zumindest teilweise umgreift sowie mit wenigstens einer Tragfläche für das plattenartige Element.

Gattungsgemäße Beschläge für Tischbeine mit rechteckigem Querschnitt weisen bekanntermaßen ein Winkelprofil auf, das in Einbaulage das Tischbein an zwei aneinanderstoßenden Seitenflächen überdeckt und mit dem Tischbein verschraubt ist. An den oberen, der Tischplatte zugewandten Kanten der Schenkelflächen des Winkelprofils sind an dem bekannten Beschlag rechtwinklig vorkragende Flansche vorgesehen, die als flächige Auflage für die Tischplatte dienen.

Mittels des bekannten Beschlags wird zwischen der Tischplatte und dem betreffenden Tischbein eine Verbindung hergestellt, die lediglich bei in vertikaler Richtung an der Tischplatte angreifenden Belastungen eine hinreichende Stabilität der Tischkonstruktion bietet. Zur Stabilisierung der Tischkonstruktion für Belastungsfälle mit horizontaler Belastungskomponente müssen neben den bekannten Beschlägen an der Tischplattenunterseite zusätzliche Einrichtungen, beispielsweise Tischzargen, Tischbeingestelle, Tragwände oder horizontale Tischbein-Querverbindungen vorgesehen werden. Alle diese Zusatzeinrichtungen aber verringern die unterhalb der Tischplatte zur Verfügung stehende Beinfreiheit. Darüber hinaus sind die Herstellung und die Montage der Zusatzeinrichtungen mit einem erheblichen konstruktiven und finanziellen Aufwand verbunden.

Der Erfindung liegt nun die Aufgabe zugrunde, einen Beschlag zu schaffen, mittels dessen sich ohne zusätzliche Versteifungen stabile Konstruktionen realisieren lassen.

Diese Aufgabe wird erfindungsgemäß dadurch gelöst, daß Beschläge der eingangs genannten Art mit einem Winkelstück versehen sind, wobei die eine Schenkelfläche des Winkelstücks als Tragfläche vorgesehen ist und sich über die als Stützelement ausgebildete zweite Schenkelfläche des Winkelstücks an der Anlagefläche abstützt. Mit dem beschriebenen Winkelstück ist eine Versteifung integraler Bestandteil des Beschlages. Auf zusätzliche Einrichtungen zur Versteifung der Konstruktion kann verzichtet werden.

Auch im Falle einer Belastung der Konstruktion mit horizontaler Belastungskomponente wirkt der erfindungsgemäße Beschlag als Tragwerk, mittels dessen die auftretenden Kräfte ohne Beeinträchtigung der Stabilität der Konstruktion aufgenommen werden können. Die Abmessungen des in vertikaler Richtung verlaufenden Stützelements lassen sich bei entsprechender Wahl von Materialart und -stärke verhältnismäßig klein halten. Infolgedessen bleibt die Anordnung des Stützelements im Falle von Tischen auf den unmittelbaren Nahbereich der Tischplatte und des jeweiligen Tischbeins beschränkt und zwischen benachbarten Tischbeinen steht in nahezu dem gesamten Zwischenraum die maximal mögliche Beinfreiheit von der Aufstellfläche der Tischbeine bis zu der Unterkante der Tischplatte zur Verfügung. Vorzugsweise ist der Beschlag mit einer Anlagefläche versehen, die das zugehörige Tischbein in Einbaulage des Beschlages lediglich teilweise umgreift. Unter dieser Voraussetzung läßt sich der Beschlag nämlich von außen unsichtbar an die Innenseite des Tischbeins ansetzen und mit diesem verbinden. Auf diese Art und Weise kann den an Tische gestellten ästhetischen Anforderungen Rechnung getragen werden.

In vorteilhafter Ausgestaltung der Erfindung ist an beiden Längskanten der Anlagefläche jeweils ein Winkelstück angeordnet, wobei die Stützelemente der Winkelstücke im wesentlichen rechtwinklig zueinander verlaufen. Die Stützelemente derartiger Beschläge verlaufen in Richtung der beiden horizontalen Belastungsachsen und gewährleisten infolgedessen eine optimale Belastungsaufnahme. Bei Tischen mit Mittelsäulen können zwei dieser erfindungsgemäßen Beschläge miteinander kombiniert verwendet werden. Dabei sind die beiden Einzelbeschläge zweckmäßigerweise an einander gegenüberliegenden Umfangs-Teilflächen der Mittelsäule anzusetzen, so daß die Stützelemente der beiden Beschläge um jeweils 90° gegeneinander versetzt senkrecht zu der Mittelsäule vorkragen. Die die Tischkonstruktion stabilisierenden Beschläge überdecken dabei lediglich den Nahbereich der Mittelsäule und somit lediglich den zentralen Bereich der Tischplattenunterseite. Im Randbereich der Tischplatte, in dem etwaige Benutzer des Tisches Platz nehmen, steht die maximale Beinfreiheit von der Aufstellfläche der Mittelsäule bis zu der Unterkante der Tischplatte zur Verfügung. Ebenfalls hervorragend geeignet ist dieser erfindungsgemäße Beschlag zur Verbindung von Tischbeinen mit rechteckigen Tischplatten. Werden die Tischbeine in den Eckbereichen der Tischplatte angesetzt, so läßt sich der Beschlag bei entsprechender Ausbildung der Anlagefläche so ausrichten, daß sich die Stützelemente bündig mit den aneinanderstoßenden Kanten der Tischplatte erstrecken. Infolgedessen ergibt sich für den Tisch ein ästhetisch ansprechendes Aussehen.

In bevorzugter Ausgestaltung der Erfindung ist vorgesehen, daß die Tragfläche bzw. die Tragflächen mit horizontalem und/oder mit vertikalem Abstand von der Anlagefläche an dem zugehörigen Stützelement vorgesehen ist bzw. sind. Da die Tragflächen nicht unmittelbar an die Anlagefläche anstoßen, besteht bei dieser Ausführungsform des erfindungsgemäßen Beschlages die Möglichkeit, den Winkel zwischen den Tragflächen bzw. den Stützelemente zu variieren. Bei Verwendung verformbaren Beschlagmaterials lassen sich die Tragflächen bzw. die Stützelemente aufeinander zu- oder voneinander weg biegen. Dies eröffnet die Möglichkeit, Fertigungtoleranzen an dem Beschlag selbst, aber auch an den mittels des Beschlags zu verbindenden Tischelementen nachträglich auszugleichen. Verlaufen beispielsweise die Kanten einer Tischplatte nicht wie vorgesehen exakt rechtwinklig zueinander, sollen aber die Stützelemente des Beschlages aus ästhetischen Gründen in Einbaulage dennoch mit den Kanten der Tischplatte fluchten, so kann durch Biegen der Stützelemente bzw. der Tragflächen der von diesen eingeschlossene Winkel an den Winkel zwischen den Kanten der Tischplatte angepaßt werden.

Eine optimale Stabilität der Tischkonstruktion ist an optimale Verhältnisse bei der Krafteinleitung in die Tischelemente gebunden. Eine optimale Kraftübertragung zwischen Tischbein und Tischplatte aber setzt einen möglichst engen und möglichst großflächigen Kontakt zwischen der Anlagefläche des Beschlages und dem dieser zugeordneten Umfangsbereich des Tischbeins voraus. Zu diesem Zweck ist die Anlagefläche in ihrer Formgebung zweckmäßigerweise an die Querschnittsform des betreffenden Tischbeins anzupassen. Bei runden Tischbeinen empfiehlt sich dementsprechend die Verwendung von Anlageflächen mit kreissegmentartigen Querschnitten entsprechender Radien. Zur Verbindung von Tischplatten mit Tischbeinen, deren ebene Seitenflächen unter einem Winkel zueinander verlaufen, eignen sich Beschläge, deren Anlagefläche entsprechend abgekantet ist. Damit ein und derselbe Beschlag für verschiedenartig ausgebildete Tischbeine, d.h. für Tischbeine, deren ebene Seitenflächen unterschiedliche Winkel einschließen, verwendet werden kann, ist in weiterer vorteilhafter Ausgestaltung der Erfindung vorgesehen, daß die Anlagefläche zwei im wesentlich ebene Teilflächen aufweist und die Teilflächen um eine in Längsrichtung des zugeordneten Pfostens verlaufende Achse gegeneinander verschwenkbar miteinander verbunden sind. Der von den Teilflächen der Anlagefläche eingeschlossene Winkel kann bei dieser Ausführungsform des erfindungsgemäßen Beschlags an den Winkel zwischen den aneinanderstoßenden Seitenflächen des zugeordneten Tischbeins angepaßt werden. Infolgedessen ist ein enger und großflächiger Kontakt zwischen der Anlagefläche des Beschlages und den betreffenden Seitenflächen des zugeordneten Tischbeines auch im Falle von Fertigungstoleranzen und/oder im Falle wechselnder Querschnitte der Tischbeine gewährleistet.

Die Erfindung wird nachfolgend anhand der schematischen Darstellung eines Ausführungsbeispiels näher erläutert.

Die Darstellung zeigt einen Beschlag zur Verbindung eines nicht dargestellten rechteckigen Tischbeins mit einer ebenfalls nicht dargestellten, senkrecht zu dem Tischbein verlaufenden Tischplatte.

Als Anlagefläche des Beschlags dient ein rechtwinklig abgekantetes Winkelprofil 1, das über Montagebohrungen 2 mit dem Tischbein verschraubt wird. An den Längskanten der Anlagefläche 1 schließen sich jeweils unter einem rechten Winkel Winkelstücke 3, 4 an. Die Winkelstücke 3, 4 verlaufen unter einem rechten Winkel zueinander und bestehen aus jeweils einer in Längsrichtung des Tischbeins verlaufenden Stützfläche 5, 6 als Stützelement sowie aus einer horizontalen Tragfläche 7, 8. An den Tragflächen 7, 8 sind Montagebohrungen 9 vorgesehen.

Zur Montage von Tischbein und Tischplatte wird der Beschlag zunächst mit der Anlagefläche 1 an die innenliegenden, d.h. an die dem Benutzer des Tischs abgewandten Seitenflächen des Tischbeins angesetzt und über die Montagebohrungen 2 mit diesem verschraubt. Dabei werden die Befestigungsschrauben ebenfalls von der Innenseite her eingedreht, so daß für den Benutzer sowohl die Anlagefläche 1 des Beschlags als auch die Köpfe der die Montagebohrungen 2 durchdringenden Schrauben unsichtbar bleiben. Anschließend wird der mit dem Tischbein verbundene Beschlag mit den Tragflächen 7, 8 im Eckbereich der Tischplatte angelegt, ausgerichtet und durch die Montagebohrungen 9 mit der Tischplatte verschraubt.

Sofern der von den Stützflächen 5, 6 bzw. von den Außenkanten der Tragflächen 7, 8 eingeschlossene Winkel nicht exakt dem Winkel zwischen den zugeordneten Kanten der Tischplatte entspricht, werden die Stützflächen 5, 6 vor dem Verschrauben des Beschlags mit der Tischplatte aufeinander zu- bzw. voneinander weggebogen. Da die Tragflächen 7, 8 nicht unmittelbar an die Anlagefläche 1 anstoßen, lassen sich die Stützflächen 5, 6 ohne großen Kraftaufwand um die Längskanten der Anlagefläche 1 biegen und mit den Kanten der Tischplatte fluchtend ausrichten.

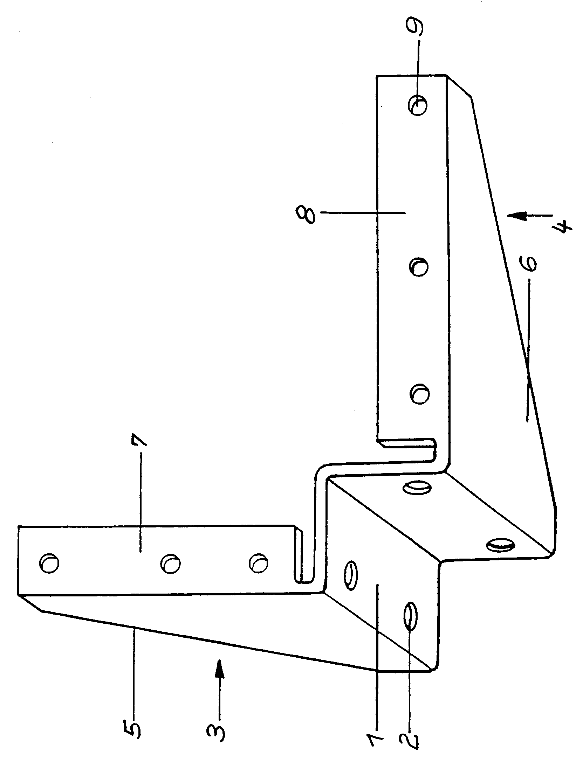

## Patentansprüche

1. Beschlag zum Verbinden von Pfosten od. dgl. mit plattenartigen Elementen insbesondere an Möbeln, vorzugsweise zum Verbinden von Tischbeinen mit Tischplatten, mit einer Anlagefläche (1) für den Pfosten, wobei die Anlagefläche (1) den Pfosten zumindest teilweise umgreift sowie mit wenigstens einer Tragfläche (7, 8) für das plattenartige Element gekennzeichnet durch wenigstens ein Winkelstück (3, 4), wobei die eine Schenkelfläche des Winkelstücks (3, 4) als Tragfläche (7, 8) vorgesehen ist und sich über die als Stützelement (5, 6) ausgebildete zweite Schenkelfläche des Winkelstücks (3, 4) an der Anlagefläche (1) abstützt.

2. Beschlag nach Anspruch 1, dadurch gekennzeichnet, daß an beiden Längskanten der Anlagefläche (1) jeweils ein Winkelstück (3, 4) angeordnet ist, wobei die Stützelemente (5, 6) der Winkelstücke (3, 4) im wesentlichen rechtwinklig zueinander verlaufen.

3. Beschlag nach Anspruch 1 oder 2, dadurch gekennzeichnet, daß die Tragfläche (7, 8) bzw. die Tragflächen (7, 8) mit horizontalem und/oder mit vertikalem Abstand von der Anlagefläche (1) an dem zugehörigen Stützelement (5, 6) vorgesehen ist bzw. sind.

4. Beschlag nach einem der Ansprüche 1 bis 3, dadurch gekennzeichnet, daß die Anlagefläche (1) zwei im wesentlichen ebene Teilflächen aufweist und die Teilflächen um eine in Längsrichtung des zugeordneten Pfostens verlaufende Achse gegeneinander verschwenkbar miteinander verbunden sind.
